# EUROPEAN PATENT SPECIFICATION

(11) **EP 2 895 716 B1**
(45) Date of publication and mention of the grant of the patent: **04.10.2017**
(21) Application number: 13737640.6
(22) Date of filing: 12.06.2013
(51) Int. Cl.: F02B 29/04, F02B 37/16

(54) **AN INTERNAL COMBUSTION PISTON ENGINE AND METHOD OF OPERATING AN INTERNAL COMBUSTION PISTON ENGINE**
KOLBENVERBRENNUNGSMOTOR UND VERFAHREN ZUM BETRIEB EINES KOLBENVERBRENNUNGSMOTORS
MOTEUR À COMBUSTION INTERNE À PISTON ET PROCÉDÉ DE COMMANDE D'UN MOTEUR À COMBUSTION INTERNE À PISTON

(30) Priority: 10.09.2012 FI 20125936
(43) Date of publication of application: 22.07.2015
(73) Proprietor: Wärtsilä Finland Oy, 65380 Vaasa (FI)
(72) Inventor: HÄGGLUND, Thomas, FI-65410 Sundom (FI)
(74) Representative: Genip Oy
(86) International application number: PCT/FI2013/050642
(87) International publication number: WO 2014/037605

(56) References cited:
- EP-A1- 1 536 115
- EP-B1- 1 028 233
- WO-A1-2007/119072
- WO-A1-2011/124786
- GB-A- 2 435 902
- US-A1- 2011 247 326

## Description

### Technical field

Invention relates to an internal combustion piston engine comprising a turbocharger system having at least one compressor part arranged to an inlet air system of the engine and at least one turbine part.

Invention relates also to a method of operating an internal combustion piston engine comprising steps of running the engine by combusting fuel in the engine; operating a turbocharger system by passing flow of the exhaust gas from the engine through at least one turbine part arranged to an exhaust gas system of the engine thus operating an at least one compressor part arranged to an inlet air system of the engine; compressing the inlet air by means of the at least one compressor part; transferring heat from the compressed combustion air and passing the air to the engine.

### Background art

Turbochargers are commonly known to improve the performance of an internal combustion piston engine regardless of the applied cycle or fuel combusted in the engine. There are also disclosed different ways of coupling or utilizing such a turbochargers in prior art engines. In order to control the operation of the compressor part of such a turbocharger it is commonly know to provide a so called waste gate to the turbine part, so that controlling the portion by-passing the turbine part it is possible control the work done by the turbine to the compressor part.

US2009278360 A1 discloses using of a gas pressure and exhaust heat of the combustion exhaust gas of an internal combustion engine for generating electricity. Document discloses a turbocharger having a turbine that is driven by gas pressure of the combustion exhaust gas and a compressor that is driven by rotational force generated in the turbine, and an air engine generating rotational force by air pressure as a power source and a generator converting the rotational force generated by the air engine to electric power. Electricity is generated by the generator using the compressed air as a power source of the air engine. The compressed air thus generated in the turbocharger is shared and distributed for combusting the internal combustion engine and for driving the air engine.

WO2011124786 A1 discloses a supercharged combustion engine and a method of regulating the said engine. The engine comprises a compressor allowing a compressed gaseous mixture to be admitted to a combustion chamber of the engine, and an exhaust circuit comprising an exhaust turbine allowing the exhaust gases to be expanded providing work for operating the compressor. The engine comprises an additional air circuit connected downstream to the compressor and receiving a variable proportion of the flow of gas leaving the compressor. The additional air circuit comprising an additional turbine connected to an electric generator for producing electrical energy from the heated and compressed gases in the additional circuit. In a conventional turbocharged engine the operation of the exhaust turbine and compressor varies greatly during the operation of the engine at low load and at high load operations. Depending on the dimensioning of the turbine in respect to the power demand of the compressor a significant portion of exhaust gas is discharged via a by-pass valve, commonly called a waste gate, directly to downstream side of the turbine at certain operational circumstances limiting i.e. controlling the power produced by the turbine to run the compressor. WO2011124786 A1 suggests that a proportion of the compressed air is passed to the additional circuit as a function of engine speed instead of using a waste gate so that a control system increases the proportion of flow in the additional circuit in case of decrease in engine load, and conversely decrease the proportion of air flow in the additional circuit in case of increase of the load of the engine. There is also shown an air cooler for cooling the compressed air so as to improve engine performance.

It is also known to utilize internal combustion piston engines in connection with so called combined heat and power (CHP) plants and processes. As an example of such it is referred to publications EP 0750106 B1 and EP 1028233 B1. In internal combustion piston engine based CHP heat may is produced by the combustion process and electricity is produced by converting mechanical energy into electricity. As there is a constantly increasing demand relating to environmental and operative effectiveness in power production also the piston engine based CHP-plants are under constant development.

Thus it is an object of the invention to provide an internal combustion piston engine CHP-plant and a method of operating such, the operation of which is effective and provides advanced operational control of the engine.

### Disclosure of the Invention

Objects of the invention are substantially met by an internal combustion piston engine comprising a turbocharger system having at least one compressor part arranged to an inlet air system of the engine and at least one turbine part arranged to an exhaust gas system of the engine, and at least one turbine-generator arranged to the inlet air system and at least one heat transfer means arranged to the inlet air system downstream the at least one compressor part and an inlet of the at least one turbine-generator is connected to the inlet air system downstream the at least one heat transfer means in the gas flow direction. It is characteristic to the invention that the engine comprises more than one heat transfer means arranged to the inlet air system and that the turbine-generator is selectively connected to the inlet air system after each of the heat transfer means.

According to an embodiment of the invention the inlet of the turbine-generator is provided with a control means which is arranged to operate in response to the inlet air demand of the engine.

According to an embodiment of the invention the control means is arranged to operate in response to the air fuel ratio value set as an operational parameter of the engine.

According to an embodiment of the invention the internal combustion piston engine is coupled to a first generator arranged to produce electrical power, and that the turbine-generator includes a second generator arranged to produce electrical power.

According to an embodiment of the invention the at least one heat transfer means of the internal combustion piston engine is arranged to transfer heat to a district heating network.

According to an embodiment of the invention that engine comprises more than one heat transfer means arranged to the inlet air system and that the turbine-generator is selectively connected to the inlet air system after each of the heat transfer means.

According to an embodiment of the invention that the turbine-generator is selectively connected to the inlet air system before the at least one heat transfer means.

Objects of the invention are substantially met also by method of operating an internal combustion piston engine comprising steps of running the engine by combusting fuel in the engine; operating a turbocharger system by passing flow of the exhaust gas from the engine through at least one turbine part arranged to an exhaust gas system of the engine thus operating an at least one compressor part arranged to an inlet air system of the engine; compressing the inlet air by means of the at least one compressor part; transferring heat from the compressed combustion air and passing the air to the engine. It is characteristic to the invention that a partial air flow is controllably separated from the combustion air after the step of transferring heat from the compressed combustion air by more than one heat transfer means and the partial air flow is led to a turbine-generator selectively connected to the inlet air system after each of the heat transfer means and subjecting the partial air flow to perform work in the additional turbine.

According to an embodiment of the invention all the exhaust gas from the engine is passed through the at least one turbine part and that the amount of the combustion air led to the engine is controlled by controlling the partial air flow.

According to an embodiment of the invention an air/fuel ratio continuously or intermittently set during the operation of the engine and the partial air flow is controlled in response to the set air/fuel ratio.

### Brief Description of Drawings

In the following, the invention will be described with reference to the accompanying exemplary, schematic drawings, in which
- Figure 1 illustrates an internal combustion piston engine, and
- Figure 2 illustrates an internal combustion piston engine depicting one or more embodiments of the invention.

### Detailed Description of Drawings

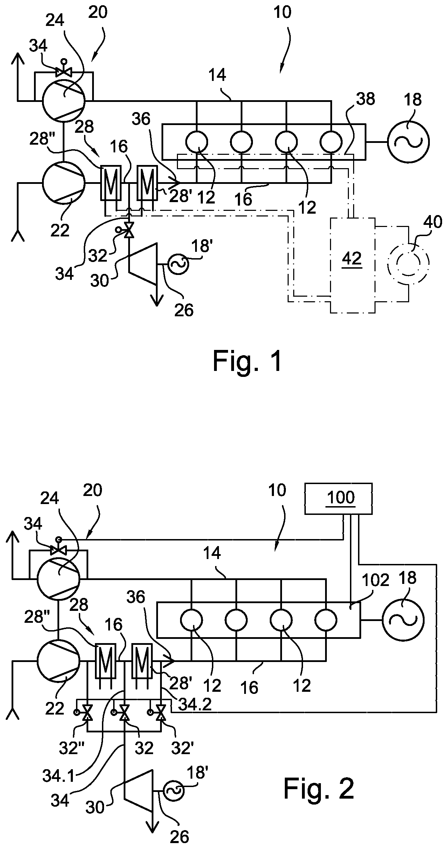

Figure 1 depicts schematically an internal combustion piston engine 10. The engine 10 comprises is cylinders 12 in which combustion is taken place when the engine is operating. Each cylinder 12 is in connection with an exhaust gas system 14 though which the exhaust gases are removed from the engine. The engine is also provided with an inlet air system 16 through which gas, normally air, is led to the engine. The crank shaft is in connection with a first generator 18 by means of which the mechanical work obtainable from the engine may be used for production of electricity.

The engine is provided with a turbocharger system 20 by means of which the energy of the exhaust gas is utilized in supercharging the inlet air. The turbocharger system 20 comprises at least one compressor part 22 which is arranged to the inlet air system 16 of the engine. The turbocharger system 20 further comprises at least one turbine part 24 which is arranged to the exhaust gas system 14 of the engine 10. Additionally the engine is provided with at least one turbine-generator 26 arranged to the inlet air system 24 as explained in the following. The turbine-generator 26 has an inlet 30 which is connected to the inlet air system 16 via a conduit 34. There is a control means, such as a valve 32 arranged in the conduit 34. The valve may be a separate valve or it may be integrated into the inlet of the turbine-generator 26. The valve may also be an inlet vane control system. The inlet air system 16 comprises also at least one heat transfer means 28 arranged to the inlet air system at a location downstream the at least one compressor part 22. The turbine-generator includes a second generator 18' which is also arranged to produce electrical power.

In particular, the inlet 30 of the at least one turbine-generator 26 is connected to the inlet air system 28 downstream the at least one heat transfer means 28 in the gas flow direction depicted by the arrow 36. This way the air, if any, controllably led to the turbine-generator 26 has already delivered heat to a heat transfer medium flowing in the heat transfer means 28.

When the engine is running and fuel is combusted in the engine 10, exhaust gas from the engine 10 is arranged to flow through turbine part 24 of the turbocharger system 20 arranged to the exhaust gas system 14 of the engine 10. The at least one compressor part 22 is operated by the turbine part 24, by means of which compressor part the pressure of the inlet air is increased. In the inlet air system 16 the compressed air is cooled to a desired temperature by transferring heat from the compressed combustion air in the at least one heat transfer means 28. After cooling the air to the desired temperature, a controlled amount of air is fed to the engine.

The controlled amount of air is fed to the engine by separating a partial air flow from at least partially cooled combustion air after transferring heat from the compressed combustion air. The portion of the separated air i.e. the partial air low is controlled by operating the control means i.e. the valve 34 and is led to the turbine-generator in which the partial air flow to performs work by generating electricity.

In the following an exemplary situation of the operation of the invention is described. When 1,5 kg/s air at 2 bar above ambient or atmospheric pressure and 85°C is led through the turbine-generator 26 exhausting into atmospheric pressure, and is allowed to cool to a temperature of about 2°C, and the power generated by the expansion of the air is about 123 kW. Thus, the output temperature of the turbine-generator being even that low, it is clear that operating this way makes the invention very energy efficient.

The engine may comprise a waste gate by means of which the operation of the turbocharger system 20 may be controlled. According to the invention the engine is operated so the in case there is a decrease the inlet air pressure first the valve 32 is opened or opened more so that any amount of air not needed in the combustion process is primarily led to the turbine-generator 26 and the turbine part 24 works excessively in respect to the air demand of the engine, and only secondary the waste gate 34 is opened in case for example the turbine-generator may not utilize the amount of air not needed in the combustion process.

Figure 1 also schematically shows a district heating network 40 which is connected to the engine so that at least one heat transfer means 28 of the internal combustion piston engine is arranged to transfer heat to a district heating network. In this embodiment the first heat transfer means 28" and the second heat transfer means 28' in the air inlet system 16 and the cooling system of the engine 38 are connected via a ductwork 42 to the district heating network 40.

In figure 2 there is shown another embodiment of the invention. It describes an internal combustion piston engine 10 otherwise similar to that shown in figure 1 but the connection of the turbine-generator 26 to the inlet air system 16 is different. Also here the inlet 30 of the at least one turbine-generator 26 is controllably 32 connected to the inlet air system 28 downstream the at least one heat transfer means 28. Here the conduit 34, which is connected at its first end to the inlet 30 of the turbine-generator 26, is provided at least with first branch 34.1 which connects the second end the conduit to the inlet air system 16 at a location downstream the at least one heat transfer means 28. The first branch 34.1 is provided with the valve 32. The conduit 34 is provided also at least with second branch 34.2 which connects the second end the conduit to the inlet air system 16 at a location downstream of the last heat transfer means 28' in the inlet air system. Also the second branch 34.2 is provided with the valve 32'. This makes is possible that a target value for the air output temperature of the turbine-generator is set and the valves 32 and 32' are controlled so that said target value is either met or is kept at a predetermined range.

Additionally the engine is provided with an optional third branch 34.3 which connects the second end the conduit to the inlet air system 16 at a location upstream of the first heat transfer means 28" in the inlet air system. Also the third branch 34.3 is provided with a control valve 32". This makes is possible that a target value for the air output temperature of the turbine-generator is set and the valves 32, 32' and 32" are controlled so that said target value is either met or is kept at a predetermined range with enhanced controlling possibilities. Also, this makes it possible to run at optimal conditions also when no useful heat is recovered from 28' and 28", only from 28" and from both 28' and 28". The basic idea is that air is taken out after the point from where the useful heat, considering the circumstances at hand, has been recovered.

In figure 2 there is shown a still another embodiment of the invention, according to which the engine is provided with a control system 100. The control system is arranged to operate the control means of the turbine-generator, i.e. the valve 32, the valve 32', the valve 32" and/or the waste gate 34, depending on whichever of these are provided in the engine. The control system is provide with an input system 102 which provides input information of the operation of the engine to the control system 100. According to an embodiment of the invention the input information is the inlet air demand of the engine and the control system 100 is arranged to operate the control means 32, 32', 32") in response to the inlet air demand of the engine. According to another embodiment of the invention the input information is the air fuel ratio value of the engine and the control system 100 is arranged to operate the control means 32, 32', 32") in response to the air fuel ratio value of the engine.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such a combination is technically feasible.

## Claims

1. An internal combustion piston engine (10) comprising a turbocharger system (20) having at least one compressor part (22) arranged to an inlet air system (16) of the engine (10) and at least one turbine part (24) arranged to an exhaust gas system (14) of the engine (10), and at least one turbine-generator (26) arranged to the inlet air system and at least one heat transfer means (28) arranged to the inlet air system (16) downstream the at least one compressor part (22), an inlet (30) of the at least one turbine-generator (26) is connected to the inlet air system (16) downstream the at least one heat transfer means (28) in the gas flow direction (36), **characterized in that** the engine (10) comprises more than one heat transfer means (28', 28") arranged to the inlet air system (16) and that the turbine-generator (26) is selectively connected to the inlet air system (16) after each of the heat transfer means.

2. An internal combustion engine (10) according to claim 1, **characterized in that** the inlet of the turbine-generator (26) is provided with a control means (100, 32, 32', 32") which is arranged to operate in response to the inlet air demand of the engine (10).

3. An internal combustion engine (10) according to claim 2, **characterized in that** the control means (100, 32, 32', 32") is arranged to operate in response to the air fuel ratio value set as an operational parameter of the engine (10).

4. An internal combustion engine (10) according to claim 1 or 2, **characterized in that** the internal combustion piston engine (10) is coupled to a first generator (18) arranged to produce electrical power, and that the turbine-generator includes a second generator (18') arranged to produce electrical power.

5. Method of operating an internal combustion piston engine (10) comprising steps of running the engine (10) by combusting fuel in the engine (10); operating a turbocharger system (20) by passing flow of the exhaust gas from the engine (10) through at least one turbine part arranged to an exhaust gas system of the engine (10) thus operating an at least one compressor part arranged to an inlet air system of the engine (10); compressing the inlet air by means of the at least one compressor part; transferring heat from the compressed combustion air and passing the air to the engine (10), **characterized by** controllably separating a partial air flow from the combustion air after the step of transferring heat (28) from the compressed combustion air with more than one heat transfer means (28', 28") and leading the partial air flow to a turbine-generator (26), which is selectively connected to the inlet air system (16) after each of the heat transfer means and subjecting the partial air flow to perform work in the additional turbine.

6. Method according to claim 7, **characterized in that** all the exhaust gas from the engine (10) is passed through the at least one turbine part and that the amount of the combustion air led to the engine (10) is controlled by controlling the partial air flow.

7. Method according to claim 8, **characterized by** setting an air/fuel ratio continuously or intermittently during the operation of the engine (10) and controlling the partial air flow in response to the set air/fuel ratio.

## Patentansprüche

1. Kolbenbrennkraftmaschine (10), umfassend ein Turboladersystem (20), das wenigstens einen Verdichterteil (22), der an einem Einlassluftsystem (16) der Kraftmaschine (10) angeordnet ist, und wenigstens einen Turbinenteil (24), der an einem Abgassystem (14) der Kraftmaschine (10) angeordnet ist, aufweist, und wenigstens einen Turbinengenerator (26), der an dem Einlassluftsystem angeordnet ist, und wenigstens ein Wärmeübertragungsmittel (28), das an dem Einlassluftsystem (16) stromabwärts des wenigstens einen Verdichterteils (22) angeordnet ist, wobei ein Einlass (30) des wenigstens einen Turbinengenerators (26) mit dem Einlassluftsystem (16) stromabwärts des wenigstens eines Wärmeübertragungsmittels (28) in der Gasströmungsrichtung (36) verbunden ist, **dadurch gekennzeichnet, dass** die Kraftmaschine (10) mehr als ein Wärmeübertragungsmittel (28', 28") umfasst, das an dem Einlassluftsystem (16) angeordnet ist, und dass der Turbinengenerator (26) nach jedem der Wärmeübertragungsmittel selektiv mit dem Einlassluftsystem (16) verbunden ist.

2. Brennkraftmaschine (10) nach Anspruch 1, **dadurch gekennzeichnet, dass** der Einlass des Turbinengenerators (26) mit einem Steuerungsmittel (100, 32, 32', 32") versehen ist, welches dafür eingerichtet ist, in Reaktion auf den Bedarf der Kraftmaschine (10) an Einlassluft zu agieren.

3. Brennkraftmaschine (10) nach Anspruch 2, **dadurch gekennzeichnet, dass** das Steuerungsmittel (100, 32, 32', 32") dafür eingerichtet ist, in Reaktion auf den Wert des Luft-Kraftstoff-Verhältnisses zu agieren, der als ein Betriebsparameter der Kraftmaschine (10) eingestellt ist.

4. Brennkraftmaschine (10) nach Anspruch 1 oder 2, **dadurch gekennzeichnet, dass** die Kolbenbrennkraftmaschine (10) mit einem ersten Generator (18) gekoppelt ist, der dafür eingerichtet ist, elektrische Leistung zu erzeugen, und dass der Turbinengenerator einen zweiten Generator (18') aufweist, der dafür eingerichtet ist, elektrische Leistung zu erzeugen.

5. Verfahren zum Betreiben einer Kolbenbrennkraftmaschine (10), die folgenden Schritte umfassend: Laufenlassen der Kraftmaschine (10) durch Verbrennen von Kraftstoff in der Kraftmaschine (10); Betreiben eines Turboladersystems (20) durch Hindurchleiten eines Stroms des Abgases von der Kraftmaschine (10) durch wenigstens einen Turbinenteil, der an einem Abgassystem der Kraftmaschine (10) angeordnet ist, dadurch Betreiben wenigstens eines Verdichterteils, der an einem Einlassluftsystem der Kraftmaschine (10) angeordnet ist; Verdichten der Einlassluft mittels des wenigstens einen Verdichterteils; Übertragen von Wärme von der verdichteten Verbrennungsluft und Leiten der Luft zu der Kraftmaschine (10), **gekennzeichnet durch** steuerbares Abzweigen eines Teilluftstroms von der Verbrennungsluft nach dem Schritt des Übertragens von Wärme (28) von der verdichteten Verbrennungsluft mit mehr als einem Wärmeübertragungsmittel (28', 28") und Leiten des Teilluftstroms zu einem Turbinengenerator (26), welcher nach jedem der Wärmeübertragungsmittel selektiv mit dem Einlassluftsystem (16) verbunden ist, und Bewirken, dass der Teilluftstrom in der zusätzlichen Turbine Arbeit verrichtet.

6. Verfahren nach Anspruch 7, **dadurch gekennzeichnet, dass** das gesamte Abgas von der Kraftmaschine (10) durch den wenigstens einen Turbinenteil geleitet wird, und dass die Menge an Verbrennungsluft, die zu der Kraftmaschine (10) geleitet wird, gesteuert wird, indem der Teilluftstrom gesteuert wird.

7. Verfahren nach Anspruch 8, **gekennzeichnet durch** kontinuierliches oder periodisches Einstellen eines Luft-Kraftstoff-Verhältnisses während des Betriebs der Kraftmaschine (10) und Steuern des Teilluftstroms in Reaktion auf das eingestellte Luft-KraftstoffVerhältnis.

## Revendications

1. Moteur à piston à combustion interne (10) comprenant un système de turbocompresseur (20) comportant au moins une partie de compresseur (22) disposée vers un système d'air d'admission (16) du moteur (10) et au moins une partie de turbine (24) disposée vers un système de gaz d'échappement (14) du moteur (10), et au moins un générateur à turbine (26) disposé vers le système d'air d'admission et au moins un moyen de transfert de chaleur (28) disposé vers le système d'air d'admission (16) en aval de l'au moins une partie de compresseur (22), une admission (30) de l'au moins un générateur à turbine (26) étant raccordée au système d'air d'admission (16) en aval de l'au moins un moyen de transfert de chaleur (28) dans la direction d'écoulement de gaz (36), **caractérisé en ce que** le moteur (10) comprend plus d'un moyen de transfert de chaleur (28', 28") disposé vers le système d'air d'admission (16) et **en ce que** le générateur à turbine (26) est raccordé de façon sélective au système d'air d'admission (16) après chacun des moyens de transfert de chaleur.

2. Moteur à combustion interne (10) selon la revendication 1, **caractérisé en ce que** l'admission du générateur à turbine (26) est pourvue d'un moyen de commande (100, 32, 32', 32") conçu pour fonctionner en réponse à la demande en air d'admission du moteur (10).

3. Moteur à combustion interne (10) selon la revendication 2, **caractérisé en ce que** le moyen de commande (100, 32, 32', 32") est conçu pour fonctionner en réponse à la valeur de rapport air-carburant fixée en tant que paramètre de fonctionnement du moteur (10).

4. Moteur à combustion interne (10) selon la revendication 1 ou 2, **caractérisé en ce que** le moteur à piston à combustion interne (10) est accouplé à un premier générateur (18) conçu pour produire de l'énergie électrique, et **en ce que** le générateur à turbine comprend un deuxième générateur (18') conçu pour produire de l'énergie électrique.

5. Procédé pour le fonctionnement d'un moteur à piston à combustion interne (10) comprenant les étapes d'actionnement du moteur (10) par combustion de carburant dans le moteur (10) ; d'actionnement d'un système de turbocompresseur (20) en faisant passer le flux de gaz d'échappement venant du moteur (10) à travers au moins une partie de turbine disposée vers un système de gaz d'échappement du moteur (10), actionnant ainsi au moins une partie de compresseur disposée vers un système d'air d'admission du moteur (10) ; de compression de l'air d'admission à l'aide de l'au moins une partie de compresseur ; de transfert de chaleur à partir de l'air de combustion comprimé et de passage d'air vers le moteur (10), **caractérisé par** la séparation commandable d'un flux d'air partiel à partir de l'air de combustion suite à l'étape de transfert de chaleur (28) à partir de l'air de combustion comprimé avec plus d'un moyen de transfert de chaleur (28', 28"), et par la conduction du flux d'air partiel vers un générateur à turbine (26), lequel est raccordé de façon sélective au système d'air d'admission (16) après chacun des moyens de transfert de chaleur, et par la soumission du flux d'air partiel à l'exécution de travail dans la turbine supplémentaire.

6. Procédé selon la revendication 7, **caractérisé en ce que** l'ensemble du gaz d'échappement venant du moteur (10) est guidé à travers l'au moins une partie de turbine, et **en ce que** la quantité de l'air de combustion guidée vers le moteur (10) est commandée par la commande du flux d'air partiel.

7. Procédé selon la revendication 8, **caractérisé par** le réglage du rapport air-carburant de façon continue ou intermittente pendant le fonctionnement du moteur (10), et par la commande du flux d'air partiel en réponse au rapport air-carburant fixé.
